# EUROPEAN PATENT SPECIFICATION

(11) **EP 1 927 502 B1**
(45) Date of publication and mention of the grant of the patent: **09.09.2009**
(21) Application number: 06024588.3
(22) Date of filing: 28.11.2006
(51) Int. Cl.: B60N 2/28

(54) **Child vehicle safety seat**
Fahrzeugkindersicherheitssitz
Siège-auto de sécurité pour enfant

(43) Date of publication of application: 04.06.2008
(73) Proprietor: Wonderland Nurserygoods Co., Ltd., Taipei (TW)
(72) Inventor: Chen, Shun-Min, Neihu, Tapei (TW); Zhong, Zhi-Ren, Neihu, Tapei (TW)
(74) Representative: Kahlhöfer, Hermann

(56) References cited:
- WO-A-20/05108155
- JP-A- 2001 239 868
- US-A1- 2003 020 308

## Description

The invention relates to a child vehicle safety seat, more particularly to a child vehicle safety seat including a load leg that is foldable.

A conventional child vehicle safety seat includes a seat base adapted to be disposed on a vehicle seat, a load leg adapted to stand on a vehicle floor, and a coupling mechanism for coupling pivotally the load leg to a front end of the seat base such that the load leg can be disposed at a selected one of expanded and folded positions relative to the seat base. By disposing the load leg at the folded position, storage space can be saved when the child vehicle safety seat is not in use. An example of such a child vehicle safety seat is disclosed in U.S. Patent No. 6,817,665.

However, in the child vehicle safety seat of the aforementioned patent, a child seat on the seat base must be removed first, followed by operation of press buttons using two hands, to release the load leg from a locked state when it is desired to fold the load leg, thereby resulting in inconvenience.

Therefore, the object of the present invention is to provide a child vehicle safety seat including a load leg that can be conveniently converted between folded and expanded positions.

Accordingly, the child vehicle safety seat of the present invention comprises a seat base, a load leg pivoted to the seat base and pivotable between folded and expanded positions relative to the seat base, and a coupling mechanism for positioning the load leg at the expanded position. The coupling mechanism includes a first engaging member, a second engaging member, and a biasing member. The first engaging member is provided on one of the seat base and the load leg, and is movable relative to the seat base between first and second positions. The second engaging member is provided on the other one of the seat base and the load leg, engages the first engaging member when the first engaging member is at the first position so as to dispose the load leg at the expanded position, and disengages the first engaging member when the first engaging member is at the second position so as to permit pivoting movement of the load leg relative to the seat base to the folded position. The biasing member biases the first engaging member to the first position, wherein the seat base includes a lower base part and an upper base part coupled to and disposed on top of said lower base part said lower base part being formed with a leg receiving space that opens downwardly, one of said first and second engaging members being provided on said upper base part, said load leg being connected pivotally to said lower base part and being received in said leg receiving space when disposed at the folded position.

Other features and advantages of the present invention will become apparent in the following detailed description of the preferred embodiments with reference to the accompanying drawings, of which:
Figure 1 is a schematic side view of the first preferred embodiment of a child vehicle safety seat according to the present invention, illustrating a load leg disposed at an expanded position relative to a seat base;
Figure 2 is a schematic bottom view of the first preferred embodiment;
Figure 3 is an exploded perspective view of the first preferred embodiment;
Figure 4 is a schematic sectional view of the first preferred embodiment, illustrating engagement between first and second engaging members to dispose the load leg at the expanded position;
Figure 5 is an enlarged fragmentary schematic sectional view of the first preferred embodiment, illustrating disengagement between the first and second engaging members in preparation for moving the load leg to a folded position;
Figure 6 is a schematic sectional view of the first preferred embodiment, illustrating the load leg disposed at the folded position relative to the seat base;
Figure 7 is an enlarged fragmentary schematic sectional view of the first preferred embodiment, illustrating movement of the load leg back to the expanded position;
Figure 8 is a schematic side view of the second preferred embodiment of a child vehicle safety seat according to the present invention, illustrating a load leg disposed at an expanded position relative to a seat base;
Figure 9 is an exploded perspective view of the second preferred embodiment;
Figure 10 is a bottom view of a portion of an upper base part of the second preferred embodiment;
Figure 11 is a schematic sectional view of the second preferred embodiment, illustrating engagement between first and second engaging members to dispose the load leg at the expanded position;
Figures 12 and 13 are enlarged fragmentary schematic sectional views of the second preferred embodiment, illustrating disengagement between the first and second engaging members to permit movement of the load leg to a folded position; and
Figure 14 is a schematic sectional view of the second preferred embodiment, illustrating the load leg disposed at the folded position relative to the seat base.

Before the present invention is described in greater detail with reference to the accompanying preferred embodiments, it should be noted herein that like elements are denoted by the same reference numerals throughout the disclosure.

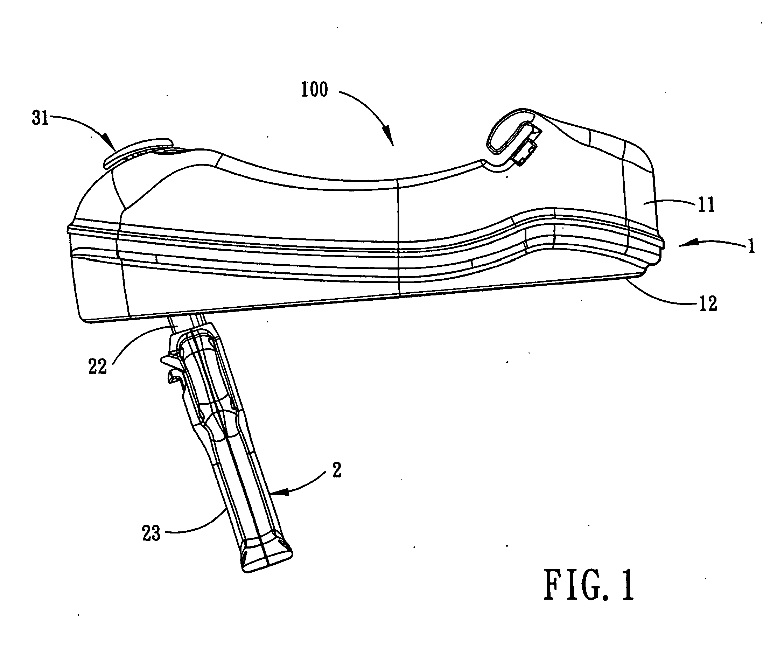

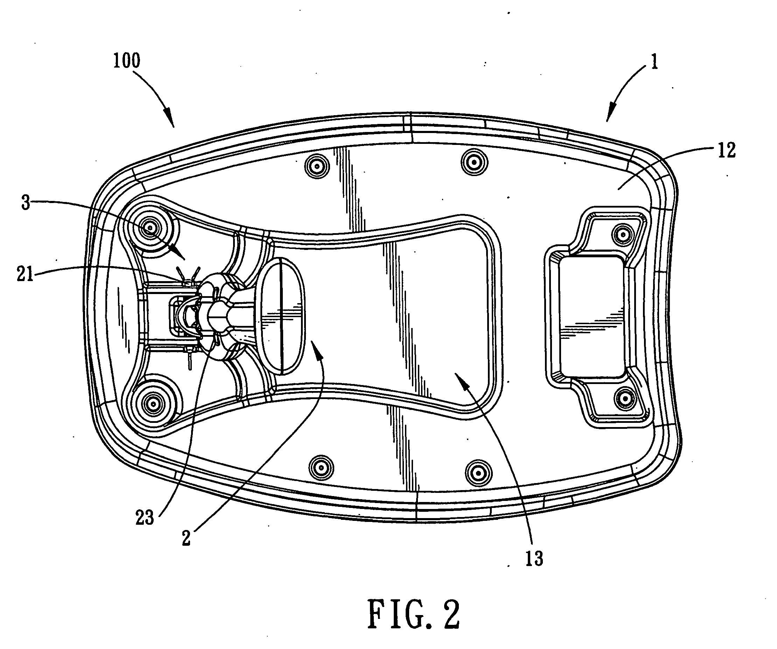

Referring to Figures 1 and 2, the first preferred embodiment of a child vehicle safety seat 100 according to the present invention is shown to include a seat base 1 adapted to be disposed on a vehicle seat (not shown), a load leg 2 adapted to stand on a vehicle floor (not shown), pivoted to the seat base 1, and pivotable between folded and expanded positions relative to the seat base 1, and a coupling mechanism 3 for positioning the load leg 2 at the expanded position.

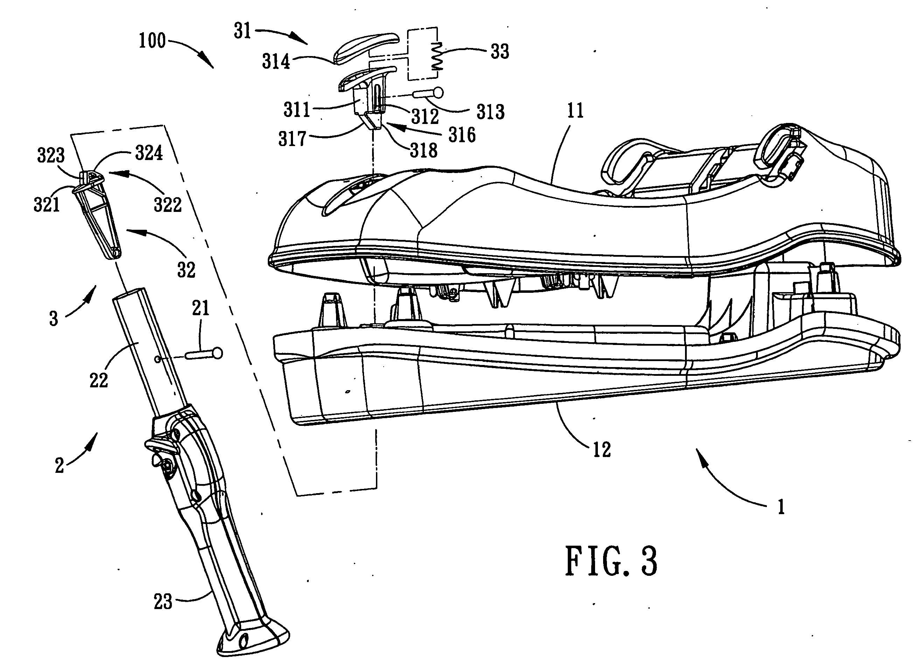

As shown in Figures 1 to 4, the seat base 1 includes a lower base part 12 and an upper base part 11 coupled to and disposed on top of the lower base part 12. The lower base part 12 is formed with a leg receiving space 13 that opens downwardly. In this embodiment, the load leg 2 has an upper portion 22 in the form of a metal tube. A pivot pin 21 connects pivotally a top end of the upper portion 22 of the load leg 2 to a bottom side of the lower base part 12 proximate to a front end of the latter. The load leg 2 further has a lower portion in the form of a plastic stand 23 for standing on the vehicle floor. Preferably, the upper portion 22 is connected telescopically to the stand 23 to adjust a height of the front end of the seat base 1 or an inclination of the seat base 1.

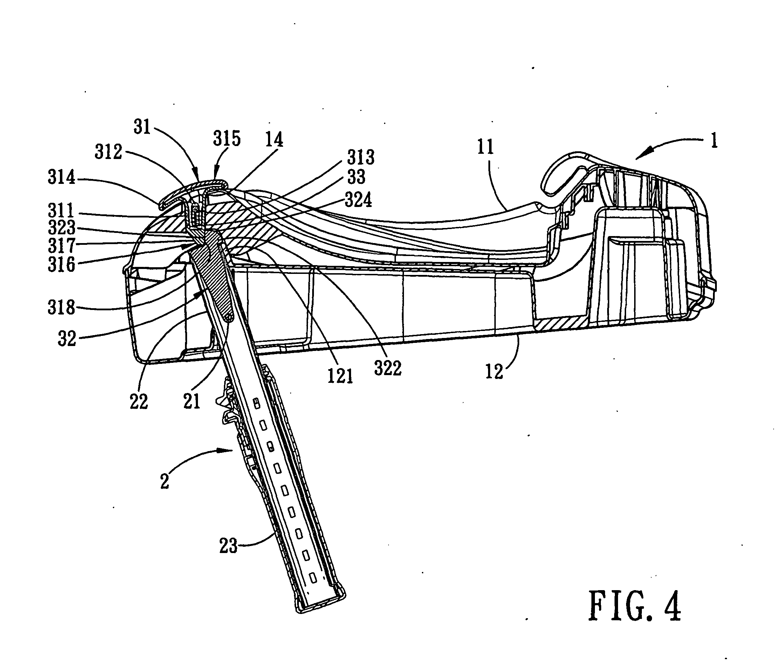

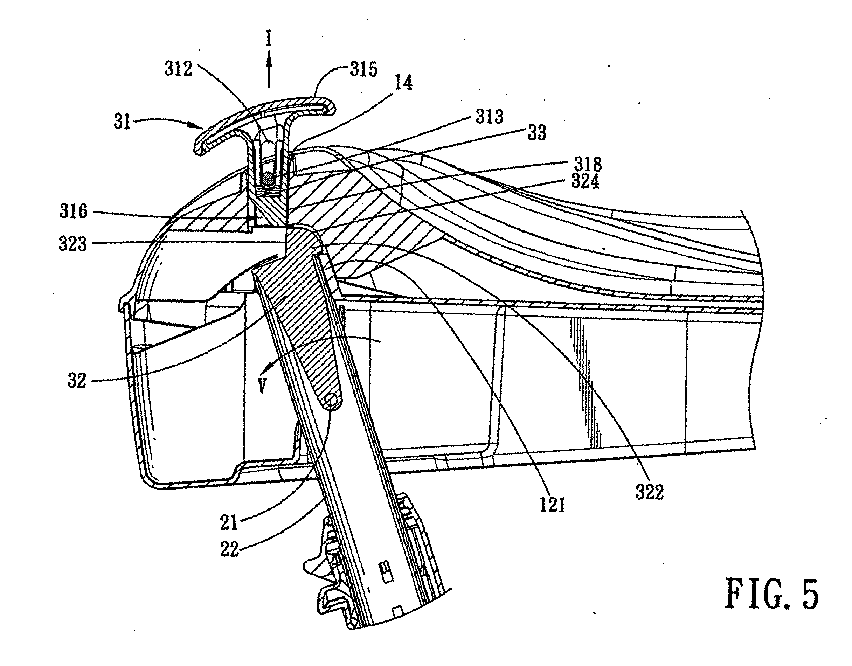

In this embodiment, the coupling mechanism 3 includes a first engaging member 31 provided on the upper base part 11 of the seat base 1, a second engaging member 32 provided on the upper portion 22 of the load leg 2, and a biasing member 33. The upper base part 11 of the seat base 1 is formed with a through hole 14 that is proximate to the front end of the seat base 1 and that is in spatial communication with the leg receiving space 13. The first engaging member 31 extends into the through hole 14, and includes a hollow post 311 that extends toward the load leg 2 and that has a closed bottom end. An operating portion 315 is provided on top of the post 311. In this embodiment, the operating portion 315 is oval-shaped and includes a cap 314 that is connected to a top end of the post 311 and that is disposed outwardly of the seat base 1. The biasing member 33 is disposed in the post 311 and provides a biasing force to the first engaging member 31. The post 311 is further formed with a slot unit 312 that includes an aligned pair of axially extending slots. The first engaging member 31 further includes a mounting pin 313 that extends through the slot unit 312 in the post 311 to mount the first engaging member 31 to the seat base 1. Accordingly, the first engaging member 31 is movable relative to the upper base part 11 between first and second positions (see Figures 4 and 5) . The biasing member 33 is a compression spring that has a first biasing end abutting against the mounting pin 313 and a second biasing end abutting against the closed bottom end of the post 311. Thebiasing member 33 thus biases the first engaging member 31 to the first position. The first engaging member 31 further has a first positioning block 316 that is formed integrally on the closed bottom end of the post 311 and that extends downwardly. The first positioning block 316 has a front side formed with an inclined face 317 that inclines downwardly and rearwardly relative to the rear end of the lower base part 12. The first positioning block 316 further has an upright positioning face 318 disposed behind the inclined face 317.

The second engaging member 32 is mounted in the upper portion 22 of the load leg 2, and has a flange 321 seated on a top edge of the upper portion 22. The pivot pin 21 further extends through the second engaging member 32 to fix the latter in the upper portion 22 of the load leg 2. The second engaging member 32 further has a second positioning block 322 extending upwardly from the flange 321. The second positioning block 322 has a front shoulder part 323 that abuts against the positioning face 318 when the first engaging member 31 is at the first position, and a curved face 324 connected to and extending rearward from the shoulder part 323.

As mentioned herein, the biasing member 33 biases the first engaging member 31 to the first position (see Figure 4), wherein the mounting pin 313 is disposed proximate to an upper end of the slot unit 312. The seat base 1 is formed with a stop portion 121 that abuts against a rear side of the upper portion 22 of the load leg 2 when the load leg 2 is at the expanded position. The shoulder part 323 of the second positioning block 322 abuts against the positioning face 318 of the first positioning block 316, thereby resulting in engagement between the first positioning block 316 and the second positioning block 322 to maintain the load leg 2 at the expanded position relative to the seat base 1.

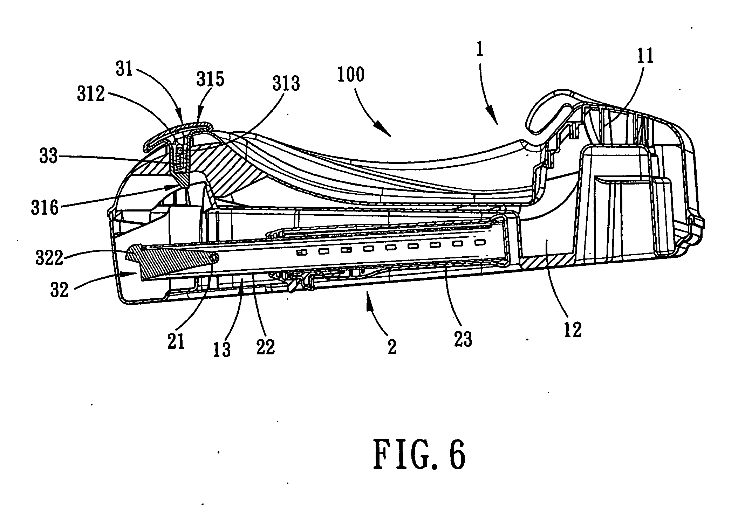

Referring to Figures 5 and 6, when it is desired to move the load leg 2 to the folded position at the bottom side of the seat base 1, the operating portion 315 of the first engaging member 31 is pulled upward in a direction (I) shown in Figure 5 so as to move the first engaging member 31 to the second position, wherein the mounting pin 313 is disposed proximate to a lower end of the slot unit 312 and the biasing member 33 is compressed. When the first engaging member 31 is at the second position, the second positioning block 322 of the second engaging member 32 is disengaged completely from the first positioning block 316 of the first engaging member 31 so as to permit pivoting movement of the load leg 2 about the pivot pin 21 relative to the seat base 1 in a direction (V) shown in Figure 5. When the load leg 2 is pivoted to the folded position at the bottom side of the seat base 1, the load leg 2 is received in the leg receiving space 13, thereby reducing the size of the child vehicle safety seat 100 to save storage space.

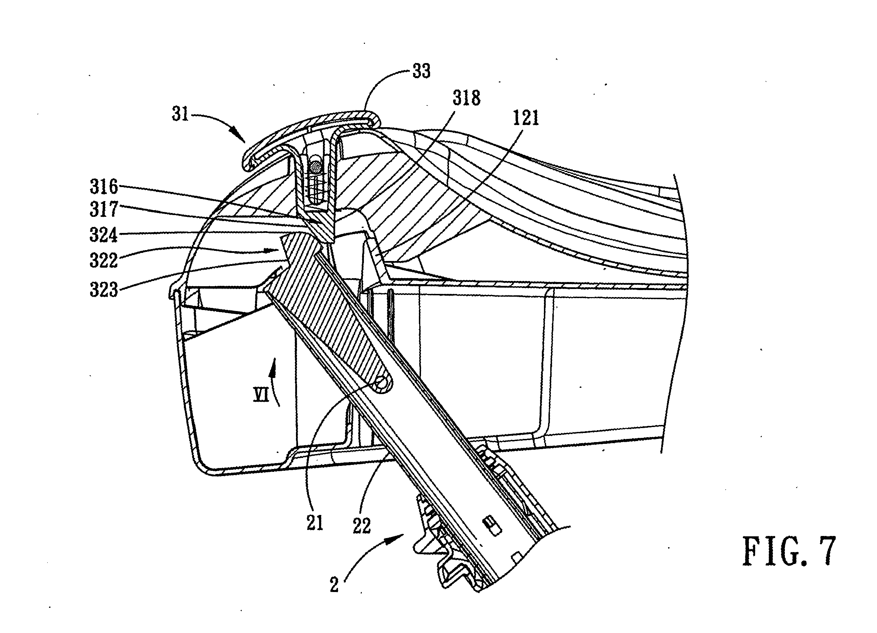

Referring to Figures 4 and 7, when the seat base 1 is lifted from the ground while the load leg 2 is at the folded position, by virtue of its weight, the load leg 2 pivots about the pivot pin 21 in a direction (VI) shown in Figure 7 relative to the seat base 1. When the curved face 324 of the second positioning block 322 abuts against the inclined face 317 of the first positioning block 316, the curved face 324 exerts an upward force on the first positioning block 316 to drive upward movement of the first engaging member 31 from the first position to the second position. As a result, the load leg 2 is able to continue to pivot relative to the seat base 1 until the rear side of the upper portion 22 of the load leg 2 abuts against the stop portion 121 of the seat base 1 and until the second positioning block 322 has moved past the first positioning block 316. When the second positioning block 322 has moved past the first positioning block 316, the first engaging member 31 is restored to the first position by the biasing member 33 so as to result in engagement between the first positioning block 316 and the second positioning block 322 to maintain the load leg 2 at the expanded position relative to the seat base 1. In this manner, conversion of the load leg 2 to the expanded position can be conducted with ease.

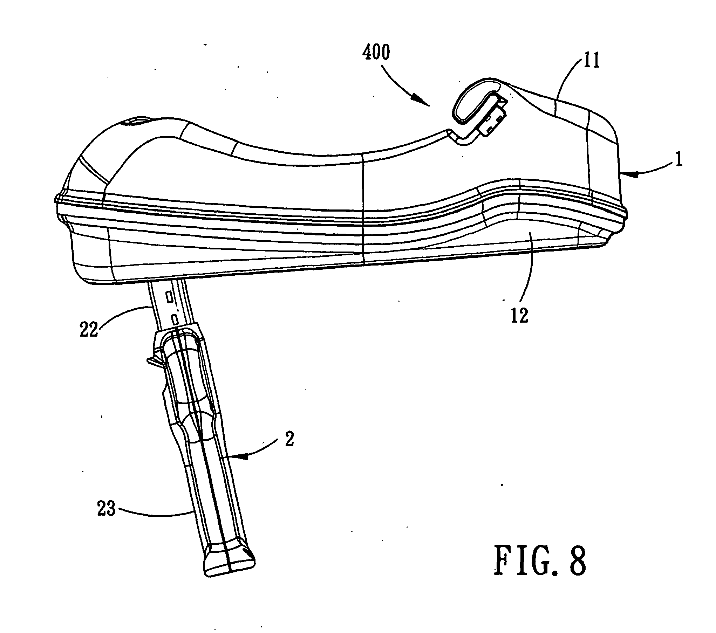

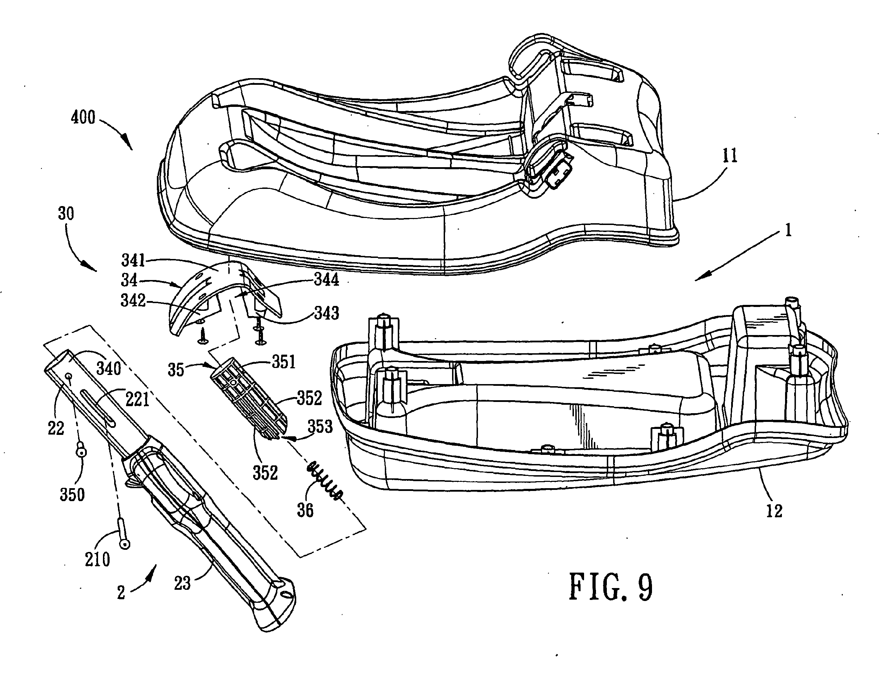

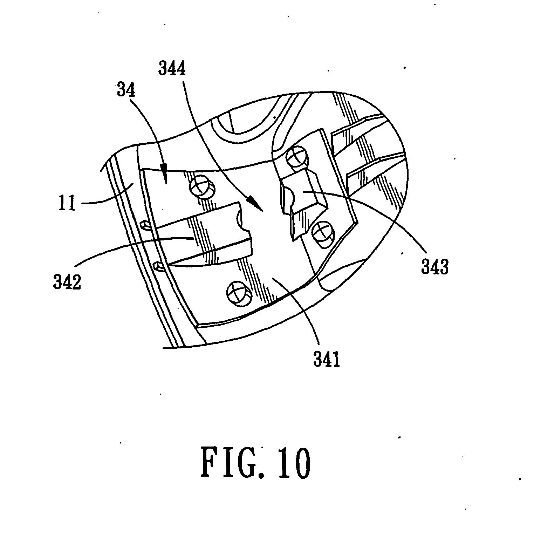

Referring to Figures 8 to 10, the second preferred embodiment of a child vehicle safety seat 400 according to this invention is shown to differ from the first preferred embodiment primarily in the structure and operation of the coupling mechanism 30.

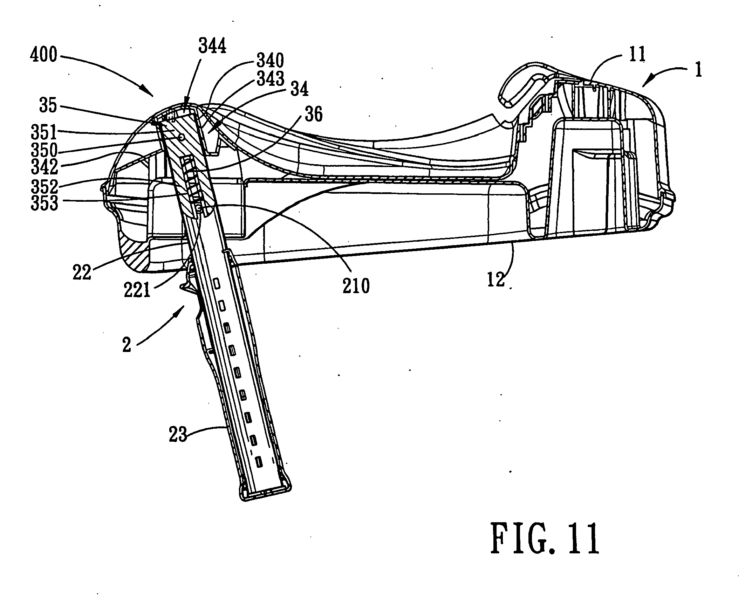

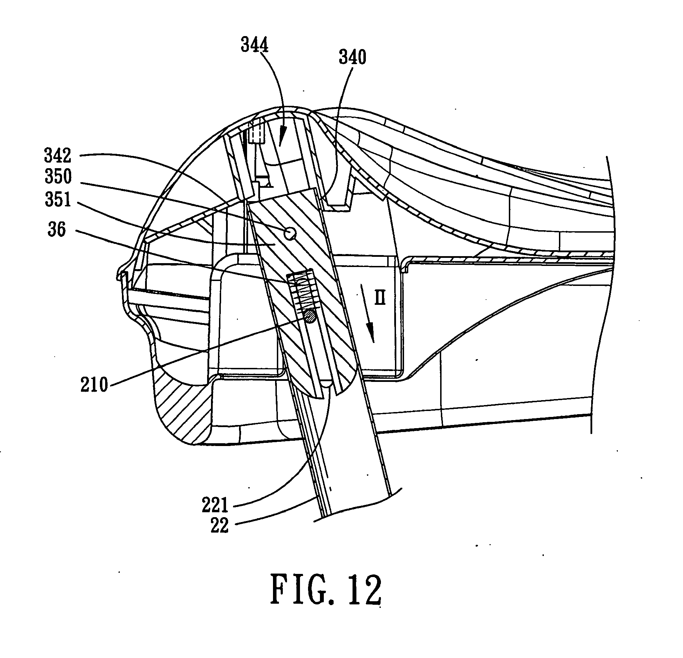

In this embodiment, the first engaging member 340 of the coupling mechanism 30 is provided at the upper portion 22 of the load leg 2. The upper portion 22 of the load leg 2 is formed with a slot unit 221 that extends along an axial direction of the load leg 2. The load leg 2 further includes a connecting pin 210 that extends through the slot unit 221 to connect the load leg 2 to the lower base part 12 of the seat base 1. The coupling mechanism 30 further includes a plug member 35 that has a mounting portion 351 inserted into a top end of the upper portion 22 of the load leg 2, and a coupling pin 350 that extends through the mounting portion 351 to connect the plug member 35 to the load leg 2. Two spaced apart extension portions 352 extend downwardly from the mounting portion 351 to receive a biasing member 36. The extension portions 352 define a gap 353 through which the connecting pin 210 extends. The biasing member 36 is a compression spring having a first biasing end abutting against the mounting portion 351 of the plug member 35 and a second biasing end abutting against the connecting pin 210. Accordingly, the first engaging member 340 provided at the upper portion 22 of the load leg 2 is movable relative to the seat base 1 between a first position, wherein the connecting pin 210 is disposed proximate to a lower end of the slot unit 221 (see Figure 11), and a second position, wherein the connecting pin 210 is disposed proximate to an upper end of the slot unit 221 (see Figure 12).

The second engaging member 34 of the coupling mechanism 30 is made of plastic, and has a main body 341 with an inverted U-shaped cross-section. The main body 341 is fixed to an inner side of the upper base part 11 proximate to a front end of the same. First and second limit blocks 342, 343 are formed integrally with and extend downwardly and respectively from a bottom side of the main body 341 at front and rear parts of the same. The limit blocks 342, 343 cooperate with the main body 341 to confine a retaining groove 344 that opens downwardly to engage the first engaging member 340.

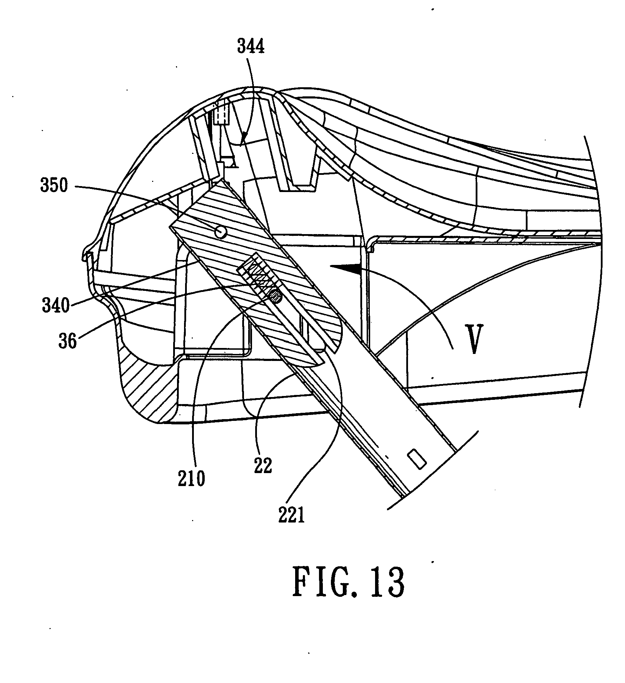

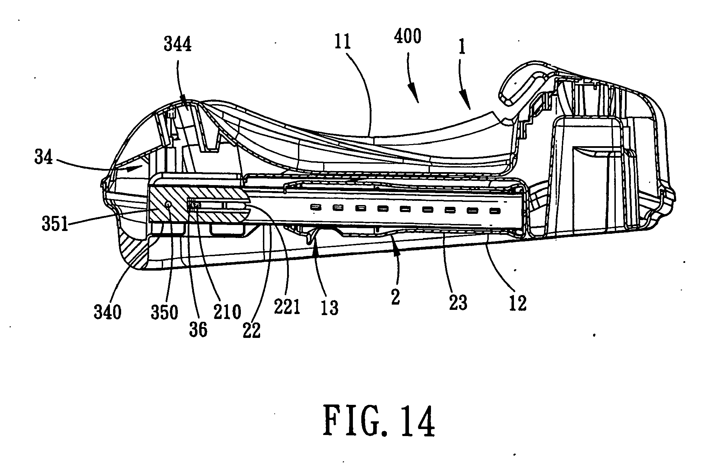

Referring to Figures 11 to 14, when the load leg 2 is disposed at the expanded position relative to the seat base 1, the first engaging member 340 can be disposed at the first position, wherein the first engaging member 340 engages the retaining groove 344 of the second engaging member 34. The first and second limit blocks 342, 343 engage the upper portion 22 of the load leg 2 to arrest pivoting movement of the load leg 2. At this time, the connecting pin 210 is disposed proximate to the lower end of the slot unit 221, and the biasing member 36 is in a non-compressed state between the mounting portion 351 of the plug member 35 and the connecting pin 210. When it is desired to fold the load leg 2, the load leg 2 is pulled downward in a direction (II) shown in Figure 12 so as to dispose the first engaging member 340 at the second position, wherein the connecting pin 210 is disposed proximate to the upper end of the slot unit 221 and wherein the first engaging member 340 is disengaged from the retaining groove 344. At this time, the load leg 2 can be pivoted about the connecting pin 21 relative to the seat base 1 in a direction (V) shown in Figure 13 until the load leg 2 is received in the leg receiving space 13, i.e., the load leg 2 is disposed at the folded position. Referring to Figure 14, when the load leg 2 is at the folded position, the lower base part 12 abuts against the load leg 2 such that the biasing member 36 is maintained in a compressed state.

When the seat base 1 is lifted from the ground while the load leg 2 is at the folded position, by virtue of its weight, the load leg 2 pivots about the connecting pin 210 in a direction opposite to the direction (V) relative to the seat base 1. Further pivoting movement of the load leg 2 is stopped when the first engaging member 340 abuts against the second limit block 343, and the first engaging member 340 is simultaneously restored to the first position so as to engage the retaining groove 344 and so as to dispose the connecting pin 210 proximate to the lower end of the slot unit 221 by virtue of the restoring action of the biasing member 36. In this manner, conversion of the load leg 2 to the expanded position is also conducted with ease in this embodiment.

In sum, in the child vehicle safety seat 100, 400 of this invention, the first engaging member 31, 340 can be disengaged from the second engaging member 32, 34 to permit pivoting movement of the load leg 2 from the expanded position to the folded position in the leg receiving space 13 to save storage space of the child vehicle safety seat 100, 400. On the other hand, the load leg 2 can be converted automatically from the folded position back to the expanded position by virtue of weight of the load leg 2 when the seat base 1 is lifted from the ground.

## Claims

1. A child vehicle safety seat (100, 400) including a seat base (1), a load leg (2) pivoted to said seat base (1) and pivotable between folded and expanded positions relative to said seat base (1), and a coupling mechanism (3, 30) for positioning said load leg (2) at the expanded position, said coupling mechanism (3, 30) including:
a first engaging member (31, 340) provided on one of said seat base (1) and said load leg (2), and movable relative to said seat base (1) between first and second positions;
a second engaging member (32, 34) provided on the other one of said seat base (1) and said load leg (2), said second engaging member (32, 34) engaging said first engaging member (31, 340) when said first engaging member (31, 340) is at the first position so as to dispose said load leg (2) at the expanded position, said second engaging member (32, 34) disengaging said first engaging member (31, 340) when said first engaging member (31, 340) is at the second position so as to permit pivoting movement of said load leg (2) to the folded position; and
a biasing member (33, 36) for biasing said first engaging member (31, 340) to the first position;
**characterized in that** said seat base (1) includes
a lower base part (12) and an upper base part (11) coupled to and disposed on top of said lower base part (12), said lower base part (12) being formed with a leg receiving space (13) that opens downwardly, one of said first and second engaging members (31, 34) being provided on said upper base part (11), said load leg (2) being connected pivotally to said lower base part (12) and being received in said leg receiving space (13) when disposed at the folded position.

2. The child vehicle safety seat (100) as claimed in Claim 1, further **characterized in that** said first engaging member (31) is provided on said upper base part (11) of said seat base (1), and includes a post (311) that extends toward said load leg (2) and a first positioning block (316) that is formed on a bottom end of said post (311), said second engaging member (32) being mounted on an upper portion of said load leg (2) and having a top end formed with a second positioning block (322) for engaging said first positioning block (316) when said first engaging member (31) is at the first position.

3. The child vehicle safety seat (100) as claimed in Claim 2, further **characterized in that** said post (311) is formed with a slot unit (312) extending along an axial direction of said post (311), said first engaging member (31) further including a mounting pin (313) that extends through said slot unit (312) in said post (311) to mount said first engaging member (31) to said upper base part (11) of said seat base (1).

4. The child vehicle safety seat (100) as claimed in Claim 2, further **characterized in that** said second positioning block (322) has a shoulder part (323), said first positioning block (316) having a positioning face (318) that abuts against said shoulder part (323) when said first engaging member (31) is at the first position.

5. The child vehicle safety seat (100) as claimed in Claim 4, further **characterized in that** said first positioning block (316) has an inclined face (317) disposed in front of said positioning face (318), said second positioning block (322) having a curved face (324) connected to and extending rearward from said shoulder part (323), said curved face (324) driving upward movement of said first engaging member (31) when said curved face (324) abuts against said inclined face (317) during movement of said load leg (2) to the expanded position.

6. The child vehicle safety seat (100) as claimed in Claim 3, further **characterized in that** said post (311) is hollow, said biasing member (33) being disposed in said post (311) and having a first biasing end abutting against said mounting pin (313) and a second biasing end abutting against a bottom end of said post (311).

7. The child vehicle safety seat (100) as claimed in Claim 2, further **characterized in that** said seat base (1) is formed with a stop portion (121) that abuts against said load leg (2) when said load leg (2) is at the expanded position.

8. The child vehicle safety seat (100) as claimed in Claim 2, further **characterized in that** said first engaging member (31) includes an operating portion (315) connected to said post (311) and disposed outwardly of said upper base part (11) of said seat base (1).

9. The child vehicle safety seat (100) as claimed in Claim 2, further **characterized in that** said load leg (2) includes a pivot pin (21) extending through said second engaging member (32) to connect pivotally said load leg (2) to said lower base part (12) of said seat base (1).

10. The child vehicle safety seat (400) as claimed in Claim 1, further **characterized in that** said first engaging member (340) is provided at an upper portion (22) of said load leg (2), said upper portion (22) of said load leg (2) being formed with a slot unit (221) that extends along an axial direction of said load leg (2), said load leg (2) further including a connecting pin (210) that extends through said slot unit (221) to connect said load leg (2) to said lower base part (12) of said seat base (1), said second engaging member (34) being provided on said upper base part (11) of said seat base (1) and being formed with a retaining groove (344) that opens downwardly to engage said first engaging member (340) when said first engaging member (340) is at the first position.

11. The child vehicle safety seat (400) as claimed in Claim 10, further **characterized in that** said upper portion (22) of said load leg (2) is tubular, said coupling mechanism (30) further including a plug member (35) that has a mounting portion (351) inserted into said upper portion (22), and a coupling pin (350) that extends through said mounting portion (351) to connect said plug member (35) to said load leg (2).

12. The child vehicle safety seat (400) as claimed in Claim 11, further **characterized in that** said biasing member (36) is disposed in said upper portion (22) of said load leg (2), and has a first biasing end abutting against said mounting portion (351) of said plug member (35) and a second biasing end abutting against said connecting pin (210), said connecting pin (210) being disposed proximate to a lower end of said slot unit (221) when said first engaging member (340) is at the first position and being disposed proximate to an upper end of said slot unit (221) when said first engaging member (340) is at the second position.

13. The child vehicle safety seat (400) as claimed in Claim 10, further **characterized in that** said load leg (2) is pivotable about said connecting pin (210) relative to said seat base (1) when said first engaging member (340) is disengaged from said retaining groove (344) in said second engaging member (34).

14. The child vehicle safety seat (100, 400) as claimed in Claim 1, further **characterized in that** said load leg (2) includes an upper portion (22) pivoted to said seat base (1) and provided with one of said first and second engaging members (31, 340, 32, 34), and a stand (23) connected telescopically to said upper portion (22).

15. The child vehicle safety seat (400) as claimed in Claim 1, further **characterized in that** said load leg (2) is provided with said first engaging member (340) and is further movable relative to said seat base (1) along an axial direction of said load leg (2) when said load leg (2) is at the expanded position to result in movement of said first engaging member (340) from the first position to the second position.

## Patentansprüche

1. Ein Fahrzeugkindersicherheitssitz (100, 400), beinhaltend eine Sitzbasis (1), ein Lastelement (2), das schwenkbar an der Sitzbasis (1) angeordnet ist und das schwenkbar zwischen eingefahrenen und ausgefahrenen Positionen relativ zur Sitzbasis (1) ist, und einen Kupplungsmechanismus (3, 30) zur Positionierung des Lastelements (2) in der ausgefahrenen Position, der Kupplungsmechanismus (3, 30) beinhaltend:
ein erstes Eingriffselement (31, 340), das auf einer Sitzbasis (1) und dem Lastelement (2) vorgesehen ist und das beweglich relativ zur Sitzbasis (1) zwischen ersten und zweiten Positionen ist;
ein zweites Eingriffselement (32, 34), das auf dem anderen Teil der Sitzbasis (1) und dem Lastelement (2) vorgesehen ist, wobei das zweite Eingriffselement (32, 34) in Eingriff mit dem ersten Eingriffselement (31, 340) kommt, wenn das erste Eingriffselement (31, 340) sich in der ersten Position befindet, um das Lastelement (2) in der ausgefahrenen Position anzuordnen, wobei das zweite Eingriffselement (32, 34) sich aus dem ersten Eingriffselement (31, 340) löst, wenn das erste Eingriffselement (31,340) sich in der zweiten Position befindet, um die Schwenkbewegung des Lastelements (2) in die eingefahrene Position zu erlauben; und
ein Vorspannungselement (33, 36) zum Vorspannen des ersten Eingriffselements (31, 340) in die erste Position;
**dadurch gekennzeichnet, dass** die Sitzbasis (1) ein unteres Basisteil (12) und ein oberes Basisteil (11) beinhaltet, der an das untere Basisteil (12) gekoppelt und oben auf diesem angeordnet ist, wobei das untere Basisteil (12) mit einem Beinaufnahmeraum (13) ausgebildet ist, der sich nach unten hin öffnet, wobei ein erstes und ein zweites Eingriffselement (31, 34) auf dem oberen Basisteil (11) vorgesehen ist, wobei das Lastelement (2) schwenkbar mit dem unteren Basisteil (12) verbunden ist und in dem Beinaufnahmeraum (13) aufgenommen wird, wenn er in der eingefahrenen Position angeordnet ist.

2. Fahrzeugkindersicherheitssitz (100) nach Anspruch 1 weiterhin **dadurch gekennzeichnet, dass** das erste Eingriffselement (31) auf dem oberen Basisteil (11) der Sitzbasis (1) vorgesehen ist, und eine Stange (311) beinhaltet, die sich zu dem Lastelement (2) erstreckt und einen ersten Positionierungsblock (316), der auf dem unteren Ende der Stange (311) geformt ist, wobei das zweite Eingriffselement (32) auf einen oberen Abschnitt des Lastelements (2) montiert ist und ein oberes Ende aufweist, das mit einem zweiten Positionierungsblock (322) ausgebildet ist, um mit dem ersten Positionierungsblock (316) in Eingriff zu kommen, wenn das erste Eingriffselement (31) sich in der ersten Position befindet.

3. Fahrzeugkindersicherheitssitz (100) nach Anspruch 2, weiterhin **dadurch gekennzeichnet, dass** die Stange (311) mit einer Nuteinheit (312) ausgebildet ist, die sich entlang einer axialen Richtung der Stange (311) erstreckt, wobei das erste Eingriffselement (31) weiterhin einen Montagestift (313) beinhaltet, der sich durch die Nuteinheit (312) hindurch in die Stange (311) erstreckt, um das erste Eingriffselement (31) auf das obere Basisteil (11) der Sitzbasis (1) zu montieren.

4. Fahrzeugkindersicherheitssitz (100) nach Anspruch 2, weiterhin **dadurch gekennzeichnet, dass** der zweite Positionierungsblock (322) einen Schulterabschnitt (323) aufweist, wobei der erste Positionierungsblock (316) eine Positionierungsfläche (318) aufweist, die gegen den Schulterabschnitt (323) anliegt, wenn das erste Eingriffselement (31) sich in der ersten Position befindet.

5. Fahrzeugkindersicherheitssitz (100) nach Anspruch 4, weiterhin **dadurch gekennzeichnet, dass** der erste Positionierungsblock (316) eine geneigte Fläche (317) aufweist, die vor der Positionierungsfläche (318) angeordnet ist, wobei der Positionierungsblock (322) eine gekrümmte Fläche (324) hat, die mit dem Schulterabschnitt (323) verbunden ist und die sich von diesem aus rückwärts erstreckt, wobei die gekrümmte Fläche (324) durch die Bewegung das erste Eingriffselement (31) nach oben bewegt wird, wenn die gekrümmte Fläche (324) während der Bewegung des Lastelements (2) in die ausgefahrene Position gegen die gekrümmte Fläche (317) anliegt.

6. Fahrzeugkindersicherheitssitz (100) nach Anspruch 3, weiterhin **dadurch gekennzeichnet, dass** die Stange (311) hohl ist, wobei das Vorspannungselement (33) in der Stange (311) positioniert ist und ein erstes Vorspannungsende aufweist, das gegen den Montagestift (313) anliegt und ein zweites Vorspannungsende, das gegen ein unteres Ende der Stange (311) anliegt.

7. Fahrzeugkindersicherheitssitz (100) nach Anspruch 2, weiterhin **dadurch gekennzeichnet, dass** die Sitzbasis (1) mit einem Stopp-Abschnitt (121) versehen ist, der gegen das Lastelement (2) anliegt, wenn sich das Lastelement (2) in der ausgefahrenen Position befindet.

8. Fahrzeugkindersicherheitssitz (100) nach Anspruch 2, weiterhin **dadurch gekennzeichnet, dass** das erste Eingriffselement (31) einen Betätigungsabschnitt (315) beinhaltet, der mit der Stange (311) verbunden ist und außerhalb des oberen Basisteils (11) der Sitzbasis (1) angeordnet ist.

9. Fahrzeugkindersicherheitssitz (100) nach Anspruch 2, weiterhin **dadurch gekennzeichnet, dass** das Lastelement (2) einen Schwenkstift (21) beinhaltet, der sich durch das zweite Eingriffselement (32) hindurch erstreckt, um das Lastelement (2) schwenkbar mit dem unteren Basisteil (12) der Sitzbasis (1) zu verbinden.

10. Fahrzeugkindersicherheitssitz (400) nach Anspruch 1, weiterhin **dadurch gekennzeichnet, dass** das erste Eingriffselement (340) an einem oberen Abschnitt (22) des Lastelements(2) vorgesehen ist, wobei der obere Abschnitt (22) des Lastelements (2) mit einer Nuteinheit (221) gebildet ist, die sich entlang einer axialen Richtung des Lastelements (2) erstreckt, wobei das Lastelement (2) weiterhin einen Verbindungsstift (210) beinhaltet, der sich durch die Nuteinheit (221) hindurch erstreckt, um das Lastelement (2) mit dem unteren Basisteil (12) der Sitzbasis (1) zu verbinden, wobei das zweite Eingriffselement (34) auf dem oberen Basisteil (11) der Sitzbasis (1) vorgesehen ist und mit einer Rückhaltenut (344) ausgebildet ist, die sich abwärts öffnet, um mit dem ersten Eingriffselement (340) in Eingriff zu kommen, wenn sich das erste Eingriffselement (340) in der ersten Position befindet.

11. Fahrzeugkindersicherheitssitz (400) nach Anspruch 10, weiterhin **dadurch gekennzeichnet, dass** der obere Abschnitt (22) des Lastelements (2) rohrförmig ist, wobei der Kupplungsmechanismus (30) weiterhin ein Steckelement (35) beinhaltet, das einen Montageabschnitt (351) aufweist, der in den oberen Abschnitt (22) eingeführt ist, und einen Kopplungsstift (350), der sich durch den Montageabschnitt (351) hindurch erstreckt, um das Steckelement (35) mit dem Lastelement (2) zu verbinden.

12. Fahrzeugkindersicherheitssitz (400) nach Anspruch 11, weiterhin **dadurch gekennzeichnet, dass** das Vorspannungselement (36) in dem oberen Abschnitt (22) des Lastelements (2) angeordnet ist, und ein erstes Vorspannungsende aufweist, das gegen den Montageabschnitt (351) des Steckelements (35) anliegt und ein zweites Vorspannungsende, das gegen den Verbindungsstift (210) anliegt, wobei der Verbindungsstift (210) in der Nähe eines unteren Endes der Nuteinheit (221) anliegt, wenn das erste Eingriffselement (340) sich in der ersten Position befindet und in der Nähe eines oberen Endes der Nuteinheit (221) angeordnet ist, wenn das erste Eingriffselement (340) sich in der zweiten Position befindet.

13. Fahrzeugkindersicherheitssitz (400) nach Anspruch 10, weiterhin **dadurch gekennzeichnet, dass** Lastelement (2) schwenkbar um den Verbindungsstift (210) relativ zu der Sitzbasis (1), wenn das erste Eingriffselement (340) aus der Rückhaltenut (344) in dem zweiten Eingriffselement (34) gelöst wird.

14. Fahrzeugkindersicherheitssitz (100, 400) nach Anspruch 1, weiterhin
**dadurch gekennzeichnet, dass** das Lastelement (2) einen oberen Abschnitt (22) beinhaltet, der schwenkbar an der Sitzbasis (1) montiert und mit einem ersten und zweiten Eingriffselement (31, 340, 32, 34) versehen ist, und ein Fuß, der teleskopisch mit dem oberen Abschnitt (22) verbunden ist.

15. Fahrzeugkindersicherheitssitz (400) nach Anspruch 1, weiterhin **dadurch gekennzeichnet, dass** das Lastelement (2) mit dem ersten Eingriffselement (340) versehen ist und weiterhin relativ zur Sitzbasis (1) entlang einer axialen Richtung des Lastelements (2) beweglich ist, wenn das Lastelement (2) sich in der ausgefahrenen Position befindet, was zu einer Bewegung des ersten Eingriffselements (340) aus der ersten Position in die zweite Position führt.

## Revendications

1. Siège-automobile de sécurité pour enfants (100, 400) comprenant une base de siège (1), un élément de charge (2) qui est agencé de façon pivotante sur la base de siège (1) et qui est pivotable entre une position rentrée et déployée relativement par rapport à la base de siège (1), et un mécanisme d'accouplement (3, 30) pour positionner l'élément de charge (2) en position déployée, le mécanisme d'accouplement (3, 30) comprenant :
un premier élément d'engagement (31, 340) qui est prévu sur une base de siège (1) et sur l'élément de charge(2) et qui est mobile relativement par rapport à la base de siège (1) entre des premières et des deuxièmes positions ;
un deuxième élément d'engagement (32, 34) qui est prévu sur l'autre partie de la base de siège (1) et l'élément de charge (2), le deuxième élément d'engagement (32, 34) s'engageant avec le premier élément d'engagement (31, 340) lorsque le premier élément d'engagement (31, 340) se trouve dans la première position pour déposer la tige en position déployée, le second élément d'engagement (32, 34) désengageant le premier élément d'engagement (31, 340), lorsque le premier élément d'engagement (31, 34) est en deuxième position pour permettre un mouvement de pivotement de l'élément de charge (2) jusqu'en position rentrée ; et
un élément de précontrainte (33, 36) pour exercer une pré-tension sur le premier élément d'engagement (31, 340) dans la première position; **caractérisé en ce que** la base de siège (1) comprend une partie de base inférieure (12) et une partie de base supérieure (11) qui est couplée à la partie de base inférieure (12) et agencée en haut de celle-ci, la partie de base inférieure (12) étant formée avec un espace de recueil de tige (13) qui s'ouvre vers le bas, un des premiers et seconds éléments d'engagement (31, 34), étant prévu sur la partie de base supérieure (11), l'élément de charge (2) étant connecté de façon pivotable à la partie de base inférieure (12) et étant reçue dans l'espace de recueil de tige (13) lorsqu'elle est disposée en position rentrée.

2. Siège-automobile de sécurité pour enfants (100) selon la revendication 1, en outre **caractérisé en ce que** le premier élément d'engagement (31) est prévu sur la partie de base supérieure (11) de la base de siège (1) et comprend une barre (311) qui s'étend vers l'élément de charge (2) et un premier bloc de positionnement (316) qui est formé sur une extrémité inférieure de la barre (311), le deuxième élément d'engagement (32) étant monté sur une partie supérieure de l'élément de charge (2) et ayant une extrémité supérieure formée avec un deuxième bloc de positionnement (322) pour engager le premier bloc de positionnement (316) lorsque le premier élément d'engagement (31) se trouve dans la première position.

3. Siège-automobile de sécurité pour enfants (100) selon la revendication 2, en outre **caractérisé en ce que** la barre (311) est formée avec une unité de rainure (312) s'étendant le long d'une direction axiale de la barre (11), le premier élément d'engagement (31) comprenant en outre une tige d'assemblage (313) qui s'étend à travers l'unité de rainure (312) dans la barre (311) pour monter le premier élément d'engagement (31) sur la partie de base supérieure (11) de la base de siège (1).

4. Siège-automobile de sécurité pour enfants (100) selon la revendication 2, en outre **caractérisé en ce que** le deuxième bloc de positionnement (322) a une partie d'épaulement (323), le premier bloc de positionnement (316) ayant une face de positionnement (318) qui s'applique contre la partie d'épaulement (323), lorsque le premier élément d'engagement (31) est en première position.

5. Siège-automobile de sécurité pour enfants (100) selon la revendication 4, en outre **caractérisé en ce que** le premier bloc de positionnement (316) a une face inclinée (317) agencée devant la face de positionnement (318), le deuxième bloc de positionnement (322) ayant une face inclinée (324) qui est connectée à la partie d'épaulement (323) et qui s'étend en arrière à partir de celle-ci, la face inclinée (324) entraînant en un mouvement vers le haut du premier élément d'engagement (31) lorsque la face inclinée (324) s'applique contre la face inclinée (317) durant le mouvement de l'élément de charge (2) vers la position déployée.

6. Siège-automobile de sécurité pour enfants (100) selon la revendication 3, en outre **caractérisé en ce que** la barre (311) est creuse, l'élément de précontrainte (33) étant agencé dans la barre (311) et ayant une première extrémité de précontrainte qui s'applique contre la tige d'assemblage (313) et une deuxième extrémité de précontrainte qui s'applique contre une extrémité inférieure de la barre (311).

7. Siège-automobile de sécurité pour enfants (100) selon la revendication 2, en outre **caractérisé en ce que** la base de siège (1) est formée avec une partie arrêt (121) qui s'applique contre l'élément de charge (2), lorsque l'élément de charge (2) se trouve en position déployée.

8. Siège-automobile de sécurité pour enfants (100) selon la revendication 2, en outre **caractérisé en ce que** le premier élément d'engagement (31) comprend une partie opérationnelle (315) qui est connectée à la barre (311) et qui est agencée à l'extérieur de la partie de base supérieure (11) de la base de siège (1).

9. Siège-automobile de sécurité pour enfants (100) selon la revendication 2, en outre **caractérisé en ce que** l'élément de charge (2) comprend une tige pivotante (21) qui s'étend à travers le deuxième élément d'engagement (32) pour connecter de façon pivotante l'élément de charge (2) avec la partie de base inférieure (12) de la base de siège (1).

10. Siège-automobile de sécurité pour enfants (400) selon la revendication 1, en outre **caractérisé en ce que** le premier élément d'engagement (340) est prévu sur une partie supérieure (22) de l'élément de charge (2), la partie supérieure (22) de l'élément de charge (2) étant formée avec une unité de rainure (221) qui s'étend le long d'une direction axiale de l'élément de charge (2), l'élément de charge (2) comprenant en outre une tige de connexion (210) qui s'étend à travers l'unité de rainure (221) pour connecter l'élément de charge (2) avec la partie de base inférieure (12) de la base de siège (1), le deuxième élément d'engagement (34) étant prévu sur la partie de base supérieure (11) de la base de siège (1) et étant formé avec une rainure de retenue (344) qui s'ouvre vers le bas pour s'engager avec le premier élément d'engagement (340), lorsque le premier élément d'engagement (340) se trouve en première position.

11. Siège-automobile de sécurité pour enfants (400) selon la revendication 10, en outre **caractérisé en ce que** la partie supérieure (22) de l'élément de charge (2) est tubulaire, le mécanisme d'accouplement (30) comprenant en outre un élément enfichable (35) qui a une partie de montage (351) qui est introduite dans la partie supérieure (22), et une tige d'accouplement (350) qui s'étend à travers la partie de montage, afin de connecter l'élément enfichable (35) à l'élément de charge (2).

12. Siège-automobile de sécurité pour enfants (400) selon la revendication 11, en outre **caractérisé en ce que** l'élément de précontrainte (36) est agencé dans la partie supérieure (22) de l'élément de charge (2), et a une première extrémité de précontrainte qui s'applique contre la partie de montage (351) de l'élément enfichable (35) et une deuxième extrémité de précontrainte s'appliquant contre la tige de connexion (210), la tige de connexion (210) étant agencée á proximité d'une extrémité inférieure de l'unité de rainure (221), lorsque le premier élément d'engagement (340) est en première position et agencé à proximité d'une extrémité supérieure de l'unité de rainure (221) lorsque le premier élément d'engagement (340) est en seconde position.

13. Siège-automobile de sécurité pour enfants (400) selon la revendication 10, en outre **caractérisé en ce que** l'élément de charge (2) est pivotable autour de la tige de connexion (210) relativement par rapport à la base de siège (1), lorsque le premier élément d'engagement (340) est désengagé de la rainure de retenue (344) dans le second élément d'engagement (34).

14. Siège-automobile de sécurité pour enfants (100, 400) selon la revendication 1, en outre **caractérisé en ce que** l'élément de charge (2) comprend une partie supérieure (22) qui est montée de manière pivotable sur la base de siège (1) et est dotée d'un premier ou second élément d'engagement (31, 340, 32, 34) et un pied qui est connecté de façon téléscopique à la partie supérieure (22).

15. Siège-automobile de sécurité pour enfants (400) selon la revendication 1, en outre **caractérisé en ce que** l'élément de charge (2) est doté du premier élément d'engagement (340) et est en outre amovible relativement à la base de siège (1) le long d'une direction axiale de l'élément de charge (2) lorsque l'élément de charge (2) est en position déployée pour résulter en un mouvement du premier élément d'engagement (340) de la première à la deuxième position.
